# EUROPÄISCHE PATENTANMELDUNG

(11) **EP 2 182 218 A2**
(43) Veröffentlichungstag der Anmeldung: **05.05.2010**
(21) Anmeldenummer: 09012303.5
(22) Anmeldetag: 29.09.2009
(51) Int. Cl.: F04D 13/06

(54) **Geräuscharme Kreiselpumpe**

(30) Priorität: 30.10.2008 DE 102008054037
(71) Anmelder: Bühler Motor GmbH, 90459 Nürnberg (DE)
(72) Erfinder: Peterreins, Thomas, 90475 Nürnberg (DE); Brunner, Achim, 91088 Bubenreuth (DE); Frühwald, Bernd, 91459 Markt Erlbach (DE); Suttner-Reimann, Armin, 91126 Schwabach (DE); Kiesel, Ramona, 90459 Nürnberg (DE); Pecher, Gerd, 86316 Friedberg (DE); Schatz, Christian, 90522 Oberasbach (DE); Späth, Ingrid, 90475 Nürnberg (DE)

(57) **Zusammenfassung**

Die Erfindung betrifft eine Kreiselpumpe (1) mit einem aus spritzgusstechnisch verarbeitbarem Kunststoffmaterial bestehendem Pumpengehäuse (2), mit einem ersten, einen Pumpenraum (3) begrenzendem Gehäuseteil (4), das mit einem zweiten, einen Elektromotor (5) aufnehmendem, einen Spalttopf (6) umfassendem und aus Kunststoffmaterial bestehendem Zwischengehäuseteil (7) verbunden ist, wobei auf den Spalttopf (6) ein bewickelter Klauenpolstator (8) des Elektromotors (5) montiert ist und innerhalb des Spalttopfs (6) ein permanentmagnetischer Rotor (9) drehbar gelagert ist, und einem aus Kunststoffmaterial bestehendem Motorgehäuseteil (10), das einen Motorraum (11) begrenzt. Aufgabe der vorliegenden Erfindung ist es, bei einer gattungsgemäßen Kreiselpumpe für einen stabilen spielfreien Aufbau des Stators zu sorgen, so dass keine Vibrationen, Geräusche oder Resonanzen auftreten, wobei der Aufbau einfach und die Herstellung wirtschaftlich ist. Diese Aufgabe wird erfindungsgemäß durch das Kennzeichen des Anspruchs 1 und dem Verfahren gemäß Anspruch 10 gelöst.

## Beschreibung

Die Erfindung betrifft eine Kreiselpumpe (1) mit einem aus spritzgusstechnisch verarbeitbarem Kunststoffmaterial bestehendem Pumpengehäuse (2), mit einem ersten, einen Pumpenraum (3) begrenzendem Gehäuseteil (4), das mit einem zweiten, einen Elektromotor (5) aufnehmendem, einen Spalttopf (6) umfassendem und aus Kunststoffmaterial bestehendem Zwischengehäuseteil (7) verbunden ist, wobei auf den Spalttopf (6) ein bewickelter Klauenpolstator (8) des Elektromotors (5) montiert ist und innerhalb des Spalttopfs (6) ein permanentmagnetischer Rotor (9) drehbar gelagert ist, und einem aus Kunststoffmaterial bestehendem Motorgehäuseteil (10), das einen Motorraum (11) begrenzt.

Aus der DE 10 2006 021 242 A1 ist eine gattungsgemäße Kreiselpumpe bekannt. Bei der Verbindung eines geschlitzten Rückschlusses mit dem Klauenpolstator wird bei der bekannten Kreiselpumpe ein Umformvorgang einer Lasche durchgeführt, durch welchen sich ein Schlitz im Rückschlussring verengt und der Rückschluss sich somit eng an den Klauenpolstator anlegt. Es hat sich jedoch herausgestellt, dass diese Verbindung wegen der geringen Steifigkeit der Lasche nicht in jedem Fall über die gesamte Lebensdauer und bei einer Vielzahl an Temperaturbedingungen vollständige Spielfreiheit garantieren kann. Unter diesen Umständen können unangenehme Geräusche, Vibrationen und ggfs. auch Resonanzen auftreten.

Aufgabe der vorliegenden Erfindung ist es daher, bei einer gattungsgemäßen Kreiselpumpe für einen stabilen spielfreien Aufbau des Stators zu sorgen, so dass keine Vibrationen, Geräusche oder Resonanzen auftreten, wobei der Aufbau einfach und die Herstellung wirtschaftlich ist.

Diese Aufgabe wird erfindungsgemäß durch die kennzeichnenden Merkmale des Anspruchs 1 gelöst. Weiterbildungen der Erfindung werden in den Unteransprüchen 2 bis 8 dargestellt. Die achsparallelen Rippen zwischen dem Spalttopf und dem Klauenpolstator bilden die Voraussetzung für eine stabile und sichere spielfreie Verbindung zwischen dem Klauenpolstator und dem Spalttopf. Die ungleichmäßigen Winkelabstände der Rippen untereinander sorgen für einen resonanzarmen Aufbau. Die Schweißverbindung zwischen dem Rückschlussring und dem Klauenpolstator ist besonders stabil und unnachgiebig, weshalb die hergestellte mechanische Verbindung unter allen zu erwartenden Bedingungen spielfrei und fest bleibt. Die Rippen zwischen dem Klauenpolstator und dem Spalttopf bewirken nach dem Aufpressen des Klauenpolstators eine spielfreie und feste Verbindung mit dem Spalttopf. Die Rippen am Spalttopf sorgen auch bei der Verbindung zwischen dem Rückschlussring und dem Motorgehäuseteil für eine stabile und spielfreie mechanische Verbindung. Gerade die unterschiedliche Rippenanzahl und deren Verteilung kann die Bildung von Resonanzen ohne zusätzliche Dämpfungsmaßnahmen unterdrücken.

Die Aufgabe wird auch durch das Verfahren gemäß Anspruch 9 gelöst, wobei die Montage durch den größeren Durchmesser des gerollten Rückschlussrings auf den Klauenpolstator erleichtert wird. Das feste Aufpressen des Rückschlussrings auf den Klauenpolstator bei gleichzeitigem Laserschweißen von Randabschnitten des Rückschlussrings miteinander erlaubt eine hervorragende spielfreie und feste Verbindung, die so unnachgiebig ist, dass die Verbindung über die gesamte Lebensdauer bestehen bleibt. Das Auftreten von nennenswerten Vibrationen wird hierdurch vermieden. Durch Aufpressen des kompakten Stators auf den Spalttopf und des Motorgehäuseteils auf den Klauenpolstator wird ein insgesamt stabiler und geräuscharmer Aufbau bei einfacher und wirtschaftlicher Montage erreicht.

Ausführungsbeispiele der Erfindung werden nachfolgend anhand der Zeichnung näher erläutert. Es zeigen:
- Fig. 1: eine Prinzipskizze mit einem Schnitt durch einen elektronisch kommutierten Gleichstrommotor einer Kreiselpumpe,
- Fig. 2: eine Prinzipskizze eines gerollten Rückschlussrings,
- Fig. 3: eine Schnittansicht durch die Kreiselpumpe und
- Fig. 4: eine Schweißvorrichtung.

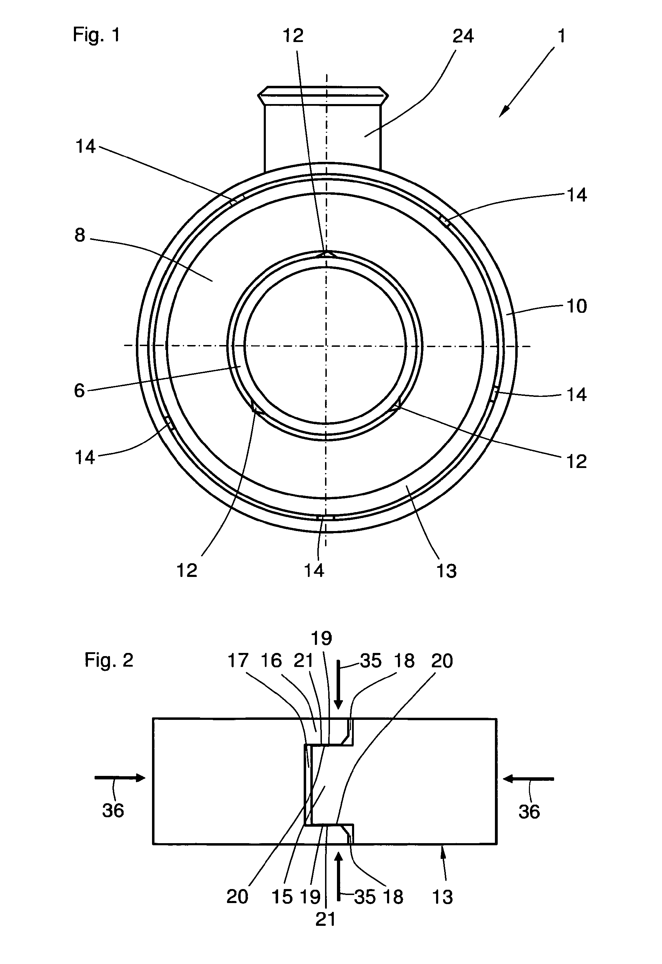

Fig. 1 zeigt eine Prinzipskizze mit einem Schnitt durch einen elektronisch kommutierten Gleichstrommotor einer Kreiselpumpe 1, mit einem Druckstutzen 24, einem Motorgehäuse 10, einem Spalttopf 6 als Bestandteil eines Zwischengehäuseteils, einen Klauenpolstator 8, und einen Rückschlussring 13. Der Spalttopf weist drei in großen Abständen um seinen Umfang verteilte achsparallele Rippen 12 auf, die hier einstückig mit dem Spalttopf sind. Die Rippen sind nicht gleichmäßig angeordnet, sondern mit unterschiedlich großen Abständen zueinander. Dies bewirkt eine Reduzierung von Resonanzen, die im Betrieb auftreten könnten. Die drei Rippen 12 sollten einen Minimalabstand von 20°und einen Maximalabstand von 170° zur benachbarten Rippe 12 aufweisen. Der Klauenpolstator ist auf diese drei Rippen aufgepresst. Das Motorgehäuse 10 weist an seiner Innenseite fünf achsparallele aus der Wandung des Gehäuses vorspringende Gehäuse-Rippen 14 auf. Diese Gehäuse-Rippen sind weitgehend gleichmäßig über den Umfang des Motorgehäuseteils 10 verteilt. Das in seiner Grundform zylinderförmige Motorgehäuseteil 10 ist auf den Rückschlussring 13 des Klauenpolstators aufgepresst, so dass sich das Gehäuse geringfügig zu einem Fünfeck verformt. Die Nachgiebigkeit des Gehäuses führt dazu, dass alle fünf Gehäuse-Rippen 14 am Rückschlussring anliegen und es auch hier nicht zu undefinierten Zuständen kommt, so dass es auch nicht zufällig zu einem Spielraum zwischen einer Gehäuse-Rippe 14 und dem Motorgehäuseteil 10 und damit zu Geräuschentwicklung kommen kann. Der Rückschlussring 13 ist aus einem Blechstreifen gerollt und seine Endabschnitte miteinander verschweißt. Zwischen dem Rückschlussring 13 und dem Klauenpolstator besteht jedoch keine Schweißverbindung.

Fig. 2 zeigt eine Prinzipskizze des gerollten Rückschlussrings 13, im verschweißten Zustand, mit einem männlichen Endabschnitt 15, einem weiblichen Endabschnitt 16, welche miteinander im Eingriff sind unter Belassung von einem ersten Spielraum 17 und einem zweiten Spielraum 18. Die Spielräume 17, 18 sind so dimensioniert, dass unter allen Toleranzzuständen des Klauenpolstators und des Rückschlussrings und der Toleranz der Anpresskraft bei der Montage stets eine sichere spielfreie Verbindung zwischen den zu verbindenden Bauteilen herstellbar ist. Um die Verschweißung mittels Laserstrahl zu erleichtern, sind zwei Schweißnähte 21 vorgesehen, die einen genügend großen Abstand voneinander haben, um den Spannbacken und dem Laserstrahl ausreichend Raum zu bieten. Die beiden Endabschnitte 15, 16 liegen in Randabschnitten 19, 20 aneinander an, so dass eine gute Schweißverbindung möglich ist. Die Schweißnähte 21 verbinden die aneinanderliegenden Randabschnitte zumindest teilweise miteinander. Die Schweißnähte 21 sind im Betrieb auf Scherung belastet und stellen daher eine sehr robuste und unnachgiebige Verbindung dar. Als zusätzliche Sicherung der Verbindung zwischen Rückschlussring 13 und dem Klauenpolstator können mitgestanzte Laschen am Rückschlusskörper nach innen verformt werden. Damit ist eine axiale Lagesicherung gewährleistet. Eine Sicherung kann auch über die aus Kunststoffmaterial bestehenden Gehäuseteile hergestellt werden.

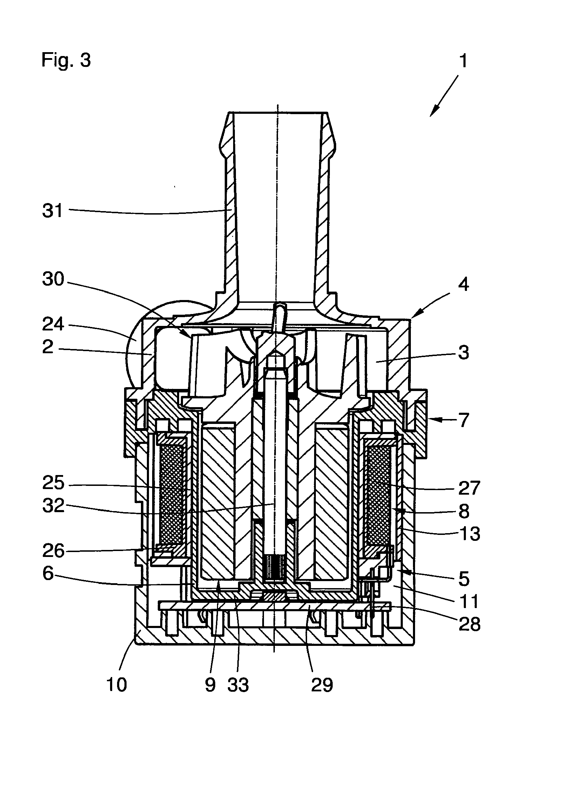

Fig. 3 zeigt eine Schnittansicht der Kreiselpumpe 1 mit dem Pumpengehäuse 2, das einen Pumpenraum 3 begrenzt, dem Zwischengehäuseteil 7, mit dem Spalttopf 6, dem Klauenpolstator 8, dem Rückschlussring 13 und dem Motorgehäuseteil 10, das einen Motorraum 11 begrenzt. Der Klauenpolstator weist Klauenpole 25, einen Isolierstoffkörper 26, eine Wicklung 27 und Anschlüsse 28 auf. Die Anschlüsse in Form von Kontaktstiften stellen eine elektrische Verbindung mit einer Leiterplatte 29 her. Der Isolierstoffkörper kann durch Umspritzen der Klauenpole hergestellt werden. Innerhalb des Spalttopfs 6 befindet sich ein drehbar gelagerter permanentmagnetischer Rotor 9, dessen Nabe einstückig mit einem Pumpenlaufrad 30 ist. Das Pumpengehäuse 2 ist einstückig mit einem Saugstutzen 31 und dem Druckstutzen 24. Der Rotor ist auf einer in einem Boden 33 des Spalttopfes befestigten Achse 32 gelagert.

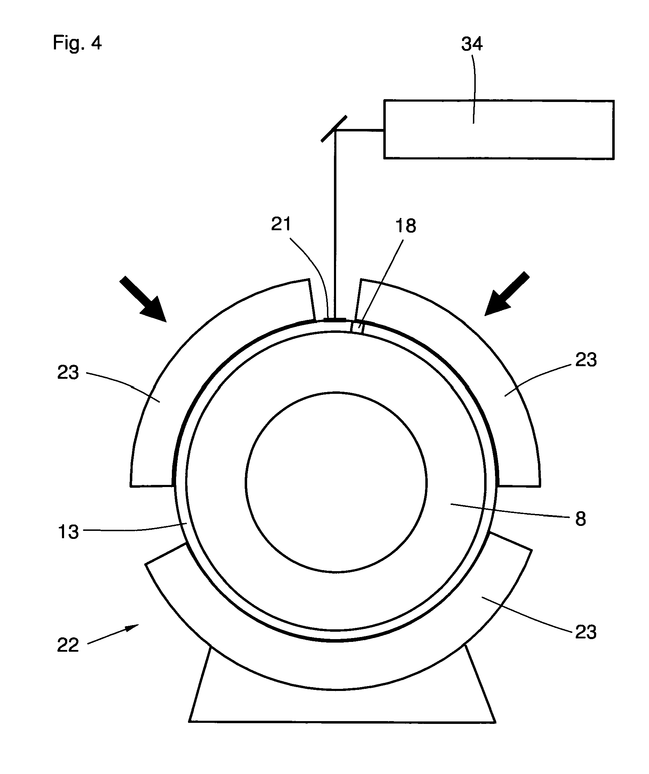

Fig. 4 zeigt eine Schweißvorrichtung 22 mit drei beweglichen Spannbacken 23, die für eine spielfreie Anlage des Rückschlussrings 13 am Klauenpolstator 8 sorgen. Vor dem Einlegen der Statorteile in die Schweißvorrichtung 22 müssen diese gefügt werden. Hierzu ist der Rückschlussring etwas aufgeweitet, so dass er sich mühelos auf den Klauenpolstator aufschieben lässt. Das Rollwerkzeug ist so eingerichtet, dass kein zusätzlicher Arbeitsgang für das Aufweiten notwendig ist. Ein Laser 34 erzeugt einen energiereichen gepulsten Laserstrahl definierter Leistung und Dauer. Während des Schweißvorgangs pressen die Spannbacken 23 den Rückschlussring 13 an den Klauenpolstator 8, gleichzeitig wird der weibliche Endabschnitt 16 gegen den männlichen Endabschnitt sowohl in tangentialer als auch in achsparalleler Richtung gedrückt, so dass sich der Spielraum 18 verringert. Die Fügespalte im Bereich der Schweißnähte 21 sollen so groß sein, dass das Fügen der Endabschnitte 15 und 16 problemlos erfolgen kann, sie sollen aber so eng wie möglich sein, um das Schweißen zu erlauben. Durch die Beaufschlagung der Endabschnitte 15, 16 in achsparalleler Richtung 35, schließen sich die Fügespalte zwischen den Endabschnitten zumindest teilweise, sie wird durch zusätzliche Werkzeugstempel vorgenommen, die hier nicht dargestellt sind. In Fig. 2 ist die achsparallele Kraftrichtung 35 und die tangentiale Kraftrichtung 36 angedeutet. Die Schweißvorrichtung ist so dimensioniert, dass der Laserstrahl ungehindert die Schweißstelle erreichen und Schweißnähte 21 ausreichender Länge erzeugen kann. Die gezeigte Schweißvorrichtung ist nur als Prinzipskizze dargestellt. Es ist eine Vielzahl anderer Ausführungen möglich, dies bezieht sich auch auf die Anzahl der Spannbacken und ihre Form.

### Bezugszeichenliste

- 1: Kreiselpumpe
- 2: Pumpengehäuse
- 3: Pumpenraum
- 4: Gehäuseteil
- 5: Elektromotor
- 6: Spalttopf
- 7: Zwischengehäuseteil
- 8: Klauenpolstator
- 9: Rotor
- 10: Motorgehäuseteil
- 11: Motorraum
- 12: Rippen
- 13: Rückschlussring
- 14: Gehäuse-Rippen
- 15: männlicher Endabschnitt
- 16: weiblicher Endabschnitt
- 17: ersten Spielraum
- 18: zweiter Spielraum
- 19: Randabschnitt
- 20: Randabschnitt
- 21: Schweißnaht
- 22: Schweißvorrichtung
- 23: Spannbacken
- 24: Druckstutzen
- 25: Klauenpol
- 26: Isolierstoffkörper
- 27: Wicklung
- 28: Anschlüsse
- 29: Leiterplatte
- 30: Pumpenlaufrad
- 31: Saugstutzen
- 32: Achse
- 33: Boden
- 34: Laser
- 35: achsparallele Kraftrichtung
- 36: tangentiale Kraftrichtung

## Patentansprüche

1. Kreiselpumpe (1) mit einem aus spritzgusstechnisch verarbeitbarem Kunststoffmaterial bestehendem Pumpengehäuse (2), mit einem ersten, einen Pumpenraum (3) begrenzendem Gehäuseteil (4), das mit einem zweiten, einen Elektromotor (5) aufnehmendem, einen Spalttopf (6) umfassendem und aus Kunststoffmaterial bestehendem Zwischengehäuseteil (7) verbunden ist, wobei auf den Spalttopf (6) ein bewickelter Klauenpolstator (8) des Elektromotors (5) montiert ist und innerhalb des Spalttopfs (6) ein permanentmagnetischer Rotor (9) drehbar gelagert ist, und einem aus Kunststoffmaterial bestehendem Motorgehäuseteil (10), das einen Motorraum (11) begrenzt, **gekennzeichnet durch** die Kombination folgender Merkmale:
a) zwischen dem Spalttopf (6) und dem Klauenpolstator (8) sind drei achsparallele Rippen (12) vorgesehen,
b) die Rippen (12) sind mit großen Winkelabständen untereinander über den Umfang des Spalttopfes (6) verteilt,
c) der bewickelte Klauenpolstator (8) ist fest mit einem aus einem Blechstreifen gebogenen Rückschlussring (13) **dadurch** verbunden, dass die beiden Endabschnitte (15, 16) des Rückschlussringes (13) fest miteinander verschweißt sind,
d) der Stator ist über die Rippen (12) fest am Spalttopf (6) angepresst,
e) das Motorgehäuseteil (10) weist mehr als drei radial nach innen vorspringende achsparallele und mit dem Motorgehäuseteil (10) einstückige Gehäuse-Rippen (14) auf, die mit großem Abstand untereinander am Innenumfang des Motorgehäuseteils (10) verteilt sind,
f) der Stator ist über die Rippen fest im Motorgehäuseteil (10) eingepresst.

2. Kreiselpumpe nach Anspruch 1, **dadurch gekennzeichnet, dass** die Rippen (12) mit ungleichmäßigen Winkelabständen untereinander über den Umfang des Spalttopfes (6) verteilt sind.

3. Kreiselpumpe nach Anspruch 1 oder 2, **dadurch gekennzeichnet, dass** das Motorgehäuseteil (10) fünf radial nach innen vorspringende Gehäuse-Rippen (14) aufweist.

4. Kreiselpumpe nach Anspruch 1, 2 oder 3, **dadurch gekennzeichnet, dass** die Rippen (12) mit dem Spalttopf (6) einstückig sind und radial nach außen aus dem Spalttopf (6) vorspringen.

5. Kreiselpumpe nach Anspruch 1, 2 oder 3, **dadurch gekennzeichnet, dass** die Rippen (12) mit dem Klauenpolstator (8) einstückig sind und radial nach innen aus dem Klauenpolstator vorspringen.

6. Kreiselpumpe nach Anspruch 5, **dadurch gekennzeichnet, dass** die Rippen (12) Bestandteil eines Isolierstoffkörpers des Klauenpolstators (8) sind und einstückig aus dem Isolierstoffkörper vorspringen.

7. Kreiselpumpe nach zumindest einem der Ansprüche 1 bis 6, **dadurch gekennzeichnet, dass** die Winkelabstände der Rippen (12) untereinander mindestens 20° betragen.

8. Kreiselpumpe nach zumindest einem der Ansprüche 1 bis 7, **dadurch gekennzeichnet, dass** die Winkelabstände der Rippen (12) untereinander maximal 170° betragen.

9. Kreiselpumpe nach zumindest einem der Ansprüche 1 bis 8, **dadurch gekennzeichnet, dass** keine zusätzlich zu montierenden Geräuschdämpfungsmittel zwischen dem Klauenpolstator (8) und dem Motorgehäuseteil (10) und zwischen dem Klauenpolstator (8) und dem Spalttopf (6) hinzugefügt sind.

10. Kreiselpumpe nach zumindest einem der vorangehenden Ansprüche, **dadurch gekennzeichnet, dass** der Rückschlussring (13) einen männlichen Endabschnitt (15) und einen weiblichen Endabschnitt (16) aufweist, wobei die Endabschnitte (15, 16) unter Belassung eines Spielraums (17, 18) in tangentialer Richtung ineinandergreifen und zwei Randabschnitte (19) des männlichen Endabschnitts an korrespondierenden Randabschnitten (20) des weiblichen Endabschnitts aneinanderliegen und die aneinanderliegenden Randabschnitte (19, 20) zumindest teilweise miteinander verschweißt sind.

11. Verfahren zur Montage einer Kreiselpumpe, **gekennzeichnet durch** folgende Verfahrensschritte:
a) Fügen eines gerollten Rückschlussrings (13) auf den Klauenpolstator (8), wobei der Rückschlussring einen größeren Durchmesser aufweist als der Klauenpolstator,
b) festes Anpressen des Rückschlussrings (13) auf den Klauenpolstator (8), bei gleichzeitigem Laserschweißen von Randabschnitten (19, 20) des Rückschlussringes (13) miteinander,
c) Aufpressen des Klauenpolstators (8) auf einen Spalttopf (6),
d) Aufpressen eines Motorgehäuseteils (10) auf den Klauenpolstator (8).

12. Verfahren nach Anspruch 11, **dadurch gekennzeichnet, dass** der weibliche Randabschnitt (16) während des Laserschweißens in achsparalleler Richtung auf den männlichen Randabschnitt (15) gedrückt wird, wodurch ein Fügespalt zwischen männlichem und weiblichem Randabschnitt verengt wird.
